# EUROPEAN PATENT APPLICATION

(11) **EP 3 640 510 A1**
(43) Date of publication of application: **22.04.2020**
(21) Application number: 18818464.2
(22) Date of filing: 14.06.2018
(51) Int. Cl.: F16L 9/02, F16L 58/10, C09J 5/00, B21D 39/04

(54) **COMPOSITE PIPE COMPRISING STAINLESS STEEL PIPE, STEEL PIPE, AND ANTI-CORROSION LAYER, AND MANUFACTURING METHOD THEREFOR**

(30) Priority: 16.06.2017 KR 20170076402
(71) Applicant: Bang, Manhyuk, Jinju-si, Gyeongsangnam-do 52845 (KR)
(72) Inventor: Bang, Manhyuk, Jinju-si, Gyeongsangnam-do 52845 (KR)
(74) Representative: Habermann, Hruschka & Schnabel
(86) International application number: PCT/KR2018/006725
(87) International publication number: WO 2018/230972

(57) **Abstract**

Disclosed is a composite pipe including an inexpensive steel pipe having good strength, and a stainless steel pipe having good corrosive resistance inserted into the steel pipe, a resin layer or coating layer being formed on an outer surface of the steel pipe to prevent corrosion, thereby providing the composite pipe having properties of high strength, low price, high corrosive resistance, and suitability of drinking water.

## Description

### [Technical Field]

The present invention relates to a composite pipe, and more particularly, to a composite pipe including an inexpensive steel pipe having good strength, a stainless steel pipe having good corrosive resistance inserted into the steel pipe, and a resin layer or coating layer being formed on an outer surface of the steel pipe to prevent corrosion, thereby providing the composite pipe having properties of high strength, low price, high corrosive resistance, and suitability of drinking water.

Also, the present invention relates to a method for manufacturing the composite pipe.

This application claims priority from Korean Patent Application No. 10-2017-0076402, the entire disclosures of which are incorporated by reference herein.

### [Background Art]

In general, steel pipes or cast iron pipes are widely used as a large water supply pipe.

The cast iron pipe has a problem with low water quality which is caused by rust and scale in the pipe. In order to solve the problem, the inner surface of the cast iron pipe is usually coated by cement, epoxy resin, or the like, but the detached cement or epoxy resin contributes to pollution of water and plugging of the pipe.

In spite of the problem inherent in the cast iron pipe, since no pipe is superior to good properties of the cast iron pipe against hydraulic pressure or water hammering applied to the large pipe, the cast iron pipes are still used for the pipe for water supply.

Although the governments or municipal corporations make an effort to supply clean water by spending a lot of budget to a filtration plant, people at home are reluctant to drink tap water directly, without using a water purifier, due to the problem of the cast iron pipe.

Meanwhile, stainless steel pipes have a high corrosion resistance and give good taste of water, the stainless steel pipes may be used as a pipe for water supply. However, the application is restrictively allowed for water supply, due to a high price and soil corrosion (galvanic corrosion etc.,) in some areas.

However, since everybody admits that the stainless steel pipe is most suitable for water supply, required is a new pipe made of stainless steel, as well as being inexpensive and strong.

### [Disclosure]

### [Technical Problem]

Accordingly, the present invention has been made in view of the above problems, and one object of the present invention to provide a composite pipe which is suitable for water supply, as well as being strong, inexpensive and resistant to corrosion.

A composite pipe is generally manufactured by forming a pipe with a steel plate and a clad steel plate of high corrosive resistance and welding them, or by inserting a pipe of high corrosive resistance into a steel pipe and fusing them or hydroforming them by hydraulic pressure. However, the clad steel plate is expensive, and a process of coupling two materials requires high facility costs and high manufacturing costs. Also, the hydroforming process has a problem in that two coupled materials are separated, and a defective rate is high. Therefore, the conventional methods are not widely employed.

A service pipe is below a pressure of 3 to 5 kgf/mm², and a transmission pipe or a distribution pipe is below the pressure of 8 to 10 kgf/mm² and below the pressure of 20 kgf/mm² even through water hammer occurs. Therefore, the inventor has found that the problems can be solved by fixing end of the pipe or by covering both ends of the steel pipe with stainless steel, in view of characteristics of fluid flow in the water pipe, and that a sufficient coupling force can be obtained by an adhesive (resin) which provides an adhesive force of 70 N/mm² or more. That is, another object of the present invention is to provide a composite pipe, of which both ends of a steel pipe are covered by stainless steel, or the steel pipe is firmly coupled to a stainless steel pipe by an adhesive.

Another object of the present invention is to provide a method for manufacturing a composite pipe.

### [Technical Solution]

According to the present invention, there is provided a composite pipe 100, 200, 300, 400 includes a steel pipe 10; a stainless steel pipe 30 inserted in the steel pipe 10; and a resin layer 50 or a coating layer formed on an outer surface of the steel pipe 10 to prevent the steel pipe 10 from being corroded.

The stainless steel pipe 30 may be expanded so that the outer surface of the stainless steel pipe 30 comes into direct contact with an inner surface of the steel pipe 10. Alternatively, the stainless steel pipe 30 may be coupled to the steel pipe 10 by an adhesive layer 70. Also, the coupling may be performed by a combination of expansion and the adhesive layer 70.

Preferably, a thickness of the stainless steel pipe 30 is within a range of 5% to 50% of a thickness of the steel pipe 10. Preferably, the resin layer 50 or the coating layer is formed in a thickness of 0.3 to 3 mm.

The steel pipe 10 may be made of steel, except for stainless steel, and the steel pipe 10 may be made of one of a carbon steel pipe for piping, an alloy steel pipe and a galvanized steel pipe.

The steel pipe 10 has good strength, and thus the composite pipe including the steel pipe has good strength.

The stainless steel pipe 30 has an extended portion at an end thereof so that the extended portion covers a terminal side 11 of the steel pipe 10, or covers the terminal side 11 and a upper surface 12 of the steel pipe 10. Therefore, the stainless steel pipe 30 is firmly coupled to the steel pipe 10.

The composite pipe 200 may include an expanded portion 210 at one end thereof. An inner surface of the expanded portion is provided with a seating groove 220 which is formed in a shape of a ring in a circumferential direction. A packing member is installed in the seating groove 220.

The composite pipe 300 includes a flange f which is vertically formed at the end of the composite pipe. The composite pipe 400 includes a flange f which is coupled to an expanded end of the steel pipe 10. The stainless steel pipe 30 has an extended portion to cover a front surface 14 of the flange f.

According to other aspect of the present invention, there is provided a method for manufacturing a composite pipe, in the case of employing expansion to couple the steel pipe 10 and the stainless steel pipe 30, the method comprising the steps of: (a) preparing the steel pipe 10 and the stainless steel pipe 30; (b) processing one end of the stainless steel pipe 30; (c) inserting the stainless steel pipe 30 into the steel pipe 10; (d) processing the other end of the stainless steel pipe 30; (e) heating and expanding the stainless steel pipe 30 and the steel pipe; and (f) coating an outer surface of the steel pipe 10 with a resin or a coating agent.

In the case of employing both the expansion and the adhesive, before the step (c), after the adhesive is applied onto at least any one of the outer surface of the stainless steel pipe 30 and the inner surface of the steel pipe 10, the stainless steel pipe 30 is inserted into the steel pipe 10.

In case of employing the adhesive only, instead of the expansion, the method comprising the steps of: (a) preparing the steel pipe 10 and the stainless steel pipe 30; (b) processing one end of the stainless steel pipe 30; (c) inserting the stainless steel pipe 30 into the steel pipe 10; (d) processing the other end of the stainless steel pipe 30; (e) heating the stainless steel pipe 30 and the steel pipe, and coating an outer surface of the steel pipe 10 with a resin or a coating agent. Before the step (c), the method further includes a step of applying the adhesive onto at least any one of the outer surface of the stainless steel pipe 30 and the inner surface of the steel pipe 10.

The expansion may be carried out in such a way that a diameter of the stainless steel pipe is increased by 1% to 20% after the stainless steel pipe 30 is inserted into the steel pipe. Since the steel pipe (10) has a stronger force acting to return to the original diameter after the expansion compared to the stainless steel pipe (30), the strong coupling can be obtained.

The step (b) includes forming the extended portion of the stainless steel pipe 30 to cover the side end 11 of the steel pipe 10, or forming the extended portion to cover the side end 11 and the upper surface 12 of the steel pipe 10. For example, one end of the stainless steel pipe 30 is bent to form an 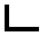 or 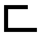 shaped extended portion.

In the step (c), the other end of the stainless steel pipe 30 is inserted into the steel pipe 10, and one end of the steel pipe 10 is fitted into the extended portion.

In the step (d), the other end of the stainless steel pipe 30 is bent to form an 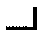 or 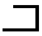 shaped extended portion, so that the other end of the steel pipe 10 is covered by the extended portion.

According to further another aspect of the present invention, there is provided a method for manufacturing a composite pipe, in the case of employing the expanded pipe to couple the steel pipe 10 and the stainless steel pipe 30, the method comprising the steps of: (a) preparing a steel pipe 10 and a stainless steel pipe 30; (b) partially expanding both ends of the steel pipe 10, coupling a ring-shaped flange f to both expanded ends of the steel pipe 10, and processing one end of the stainless steel pipe 30 to have an 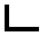 shape; (c) inserting the stainless steel pipe 30 into the steel pipe 10; (d) expanding the pipe; (e) processing the other end of the stainless steel pipe 30 to have an 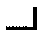 shape; (f) pressing both processed ends of the stainless steel pipe 30 against the flange f to come into contact with each other; and (g) coating an outer peripheral surface of the steel pipe 10 with a resin or a coating agent.

In the case of employing both the expansion and the adhesive, after the adhesive is applied onto at least any one of the outer surface of the stainless steel pipe 30 and the inner surface of the steel pipe 10, the stainless steel pipe 30 is inserted into the steel pipe 10 in the step (c).

According to the present invention, the expansion may be carried out from a center portion of the pipe to both ends in order, from one end to the other end in order, or for the whole pipe at once.

A pipe expanding unit 500, 700 for the pipe expansion includes a pipe expanding mold 510, 710 having at least two pipe expanding members 512, 712 disposed in a doughnut cross sectional shape; an outer tube 530, 730 enclosing an outer surface of the pipe expanding mold 510, 710; and a pressing member for moving the pipe expanding mold 510, 710 in a radial direction of the pipe at the same time or in order to press the outer tube 530, 730.

Preferably, the pressing member has an inner tube 540 installed in an inner hollow portion 516 of the pipe expanding mold 510. The inner tube 540 is extended and installed in a longitudinal direction of the pipe, and is supplied with a fluid from an outside to be expanded.

Preferably, the pipe expanding mold 710 has a width shorter than a length of the pipe, and a plurality of pipe expanding molds 710 are disposed in the pipe to be adjacent to each other. The pipe expanding mold 710 is independently moved in the radial direction of the pipe, and the pressing member is a wedge 720 or a hydraulic cylinder.

The wedge 720 is inserted into an inner hollow portion 716 of the plurality of pipe expanding molds 710 to move the pipe expanding molds 710 in the radial direction of the pipe and thus expand the pipe. The hydraulic cylinder is installed in the inner hollow portion 716 to correspond to the respective pipe expanding molds 710.

Alternatively, the pipe expanding unit 600 may include a plurality of partitions 610 installed at regular intervals; a tube 620 installed between the partitions 610 and being expandable in the radial direction of the pipe; and a valve 640 for connecting the adjacent tubes 620 each installed through the partitions 610.

The tube 620 corresponding to the center portion of the pipe or one end of the pipe is supplied with a fluid from the outside, and is first expanded to have a predetermined pressure, and then the fluid is supplied to the adjacent tube 620 via the valve 640.

The pipe is sequentially expanded by the sequential supply of the fluid to the tube 620 via the valve 640.

### [Advantageous Effects]

The invention has the following advantages.

First, there is provided the composite pipe with properties of high strength, low price, high corrosive resistance, and suitability of drinking water. More specifically, since the composite pipe includes the inexpensive steel pipe having the good strength, and the stainless steel pipe having the good corrosive resistance inserted into the steel pipe, the outer surface of the steel pipe being covered by the resin or coating layer for the purpose of corrosion prevention, the composite pipe is suitable for a hygienic pipe having the high strength, the low price, and the high corrosive resistance.

Second, since both ends of the steel pipe are covered by the stainless steel, the stainless steel pipe can be strongly coupled to the steel pipe.

And, there is provided the method for manufacturing the composite pipe.

### [Description of Drawings]

Fig. 1 is a perspective view illustrating a composite pipe according to the first embodiment of the invention.
Fig. 2 is a cross-sectional view taken along the line II-II' in Fig. 1.
Fig. 3 is a cross-sectional view taken along the line III-III' in Fig. 1.
Figs. 4a to 6b are enlarged cross-sectional views respectively illustrating modified end of the composite pipe in Fig. 1.
Figs. 7 and 8 are illustrating a sequential process for manufacturing the composite pipe having the end shown in Figs. 6a and 6b.
Fig. 9 is a cross-section illustrating a composite pipe according to the second embodiment of the invention.
Figs. 10a and 10b are enlarged cross-section respectively illustrating modified end of the composite pipe in Fig. 9.
Fig. 11 is a cross-section illustrating a composite pipe according to the third embodiment of the invention.
Fig. 12 is a cross-section illustrating a composite pipe using expansion to couple a stainless steel pipe and a steel pipe according to the fourth embodiment of the invention.
Fig. 13 is illustrating a sequential process for manufacturing the composite pipe in Fig. 12.
Figs. 14a and 14b are cross-sectional views illustrating another method for expanding the stainless steel pipe in Fig. 12, respectively.
Fig. 15 is a cross-section illustrating a modified embodiment of the composite pipe in Fig. 12, to show a composite pipe having the expansion and the adhesive to couple a stainless steel pipe and a steel pipe.
Fig. 16 is illustrating a sequential process for manufacturing the composite pipe in Fig. 15.
Figs. 17a and 17b are cross-section respectively illustrating another method for expanding the stainless steel pipe in Fig. 15.
Fig. 18a is a cross-section illustrating a conventional pipe expanding method.
Fig. 18b is a cross-section illustrating a state immediately before the pipe is expanded by the pipe expanding mold of Fig. 18a.
Fig. 19a is a cross-section illustrating a state in which a pipe expanding unit is installed in the pipe.
Fig. 19b is a cross-section illustrating a process for expanding the pipe by using the pipe expanding unit in Fig. 19a.
Fig. 20 is a cross-section illustrating another pipe expanding unit installed in the pipe.
Fig. 21 is a cross-section illustrating an expanding process by using the pipe expanding unit in Fig. 20.
Fig. 22a is a cross-section illustrating another pipe expanding unit installed in the pipe.
Fig. 22b is a cross-section illustrating an expanding process by using the pipe expanding unit in Fig. 22a.
Fig. 23a is a cross-section illustrating another pipe expanding unit installed in the pipe.
Fig. 23b is a cross-section illustrating an expanding process by using the pipe expanding unit in Fig. 23a.

### [Mode for Invention]

Hereinafter, embodiments of the present invention will be described in detail with reference to the accompanying drawings. Prior to the description, the terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

In the following description, like reference numerals are attached to elements identical to those throughout the specification.

### Embodiment 1

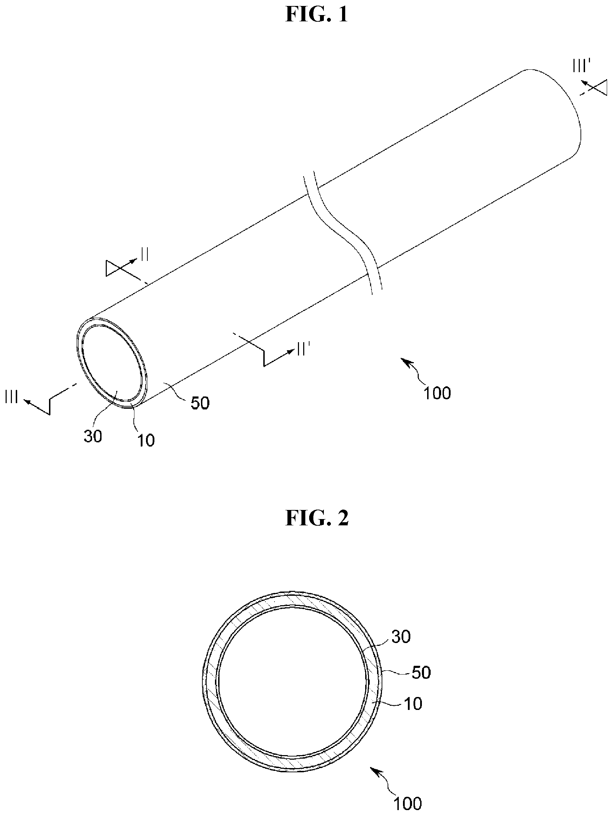

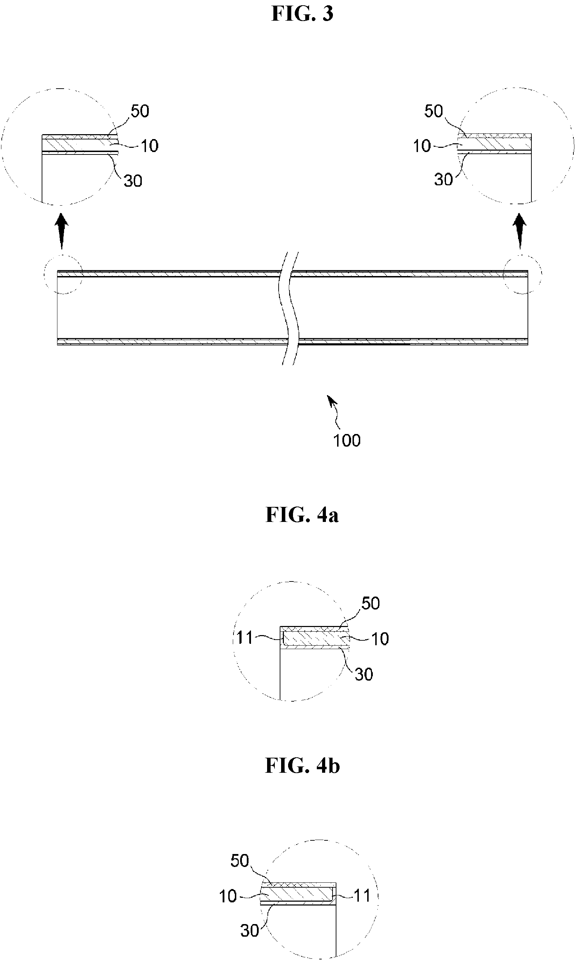

Fig. 1 is a perspective view illustrating a composite pipe according to the first embodiment of the invention, Fig. 2 is a cross-section taken along the line II-II' in Fig. 1, and Fig. 3 is a cross-section taken along the line III-III' in Fig. 1.

As illustrated in the drawings, a composite pipe 100 includes a steel pipe 10, a stainless steel pipe 30 inserted in the steel pipe 10, and a resin layer 50 or a coating layer formed on an outer surface of the steel pipe 10.

The steel pipe 10 may be one of a carbon steel pipe for piping, an alloy steel pipe and a galvanized steel pipe. The steel pipe 10 has good strength which contributes to increased strength of the composite pipe including the steel pipe.

The stainless steel pipe 30 is inserted and installed in the steel pipe 10. The stainless steel pipe 30 is made of stainless steel, and as widely known in the art, since the stainless steel is resistant to corrosion and is hygienic, it can solve the rust and scale problem of a conventional steel pipe.

Preferably, a thickness of the stainless steel pipe 30 is within a range of 5% to 50% of a thickness of the steel pipe 10. If the thickness of the stainless steel pipe 30 is less than 5% of the thickness of the steel pipe 10, corrosive resistance is not proper. If the thickness of the stainless steel pipe 30 exceeds 50% of the thickness of the steel pipe 10, the stainless steel becomes thicker than required, and thus the cost of the composite pipe 100 is increased which is economically unfavorable.

The stainless steel pipe 30 is made of stainless steel sheet (3 mm or less in thickness), stainless steel sheet of 1 mm or less in thickness, or stainless steel sheet of 2 mm or less in thickness, but the invention is not limited thereto. The stainless steel pipe 30 may be made of stainless steel of 3 mm to 6 mm in thickness or thick stainless steel plate (6 mm or more in thickness). The stainless steel may be processed by a residual stress method, a bending plastic process, or roll forming etc.,, but the invention is not limited thereto. Instead of the stainless steel pipe, any pipe made of a material having good corrosive resistance, like the stainless steel, may be used.

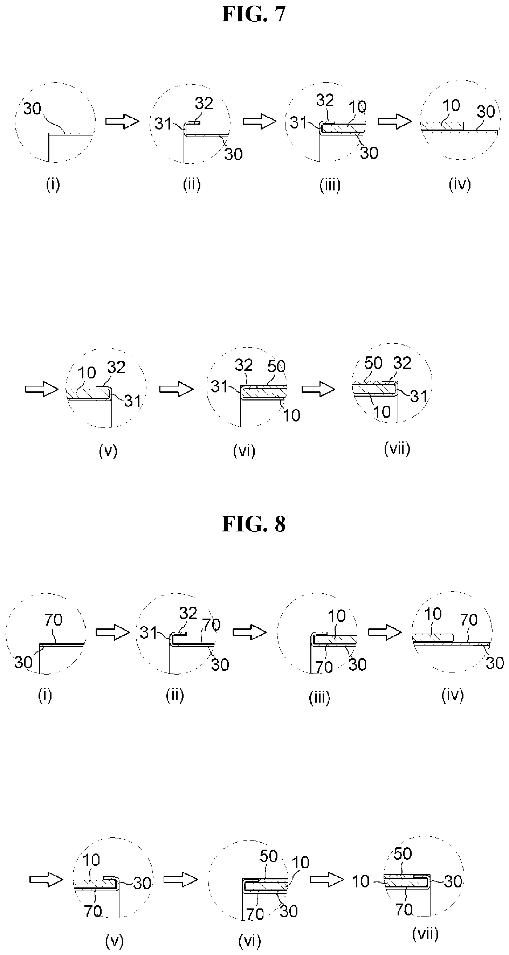

The stainless steel pipe 30 is expanded so that the outer surface of the stainless steel comes into contact with the inner surface of the steel pipe 10, or the stainless steel pipe 30 is coupled to the steel pipe 10 by an adhesive layer 70 (Figs. 8, 15, 16, 17a and 17b). Alternatively, the stainless steel pipe 30 may be coupled to the steel pipe 10 by a combination of the adhesive layer 70 and the expansion.

Preferably, the expansion of the stainless steel pipe 30 is performed to increase a diameter of the stainless steel pipe by 1% to 20%. If the diameter is increased by less than 1%, the coupling force between the stainless steel pipe 30 and the steel pipe 10 is not enough. If the diameter is increased by more than 20%, the stainless steel pipe 30 and the steel pipe 10 become excessively larger, which alters a physical property thereof.

The adhesive layer 70 is shown only in Figs. 8, 15, 16, 17a and 17b, the coupling between the stainless steel pipe 30 and the steel pipe 10 may be carried out by any one of the expansion and the adhesive layer 70, or a combination of the expansion and the adhesive layer 70. The adhesive layer 70 is shown or not in the drawings, depending upon the coupling method.

The outer surface of the steel pipe 10 is coated by a resin layer 50. Preferably, the resin layer 50 is made of a polyethylene resin, but some elements for improving a physical property, such as corrosive resistance, may be added to the polyethylene resin. Instead of the resin layer 50, the outer surface of the steel pipe 10 may be covered by a coating layer. The resin layer 50 and the coating layer prevent corrosion of the steel pipe 10. Accordingly, the resin layer 50 or the coating layer is preferably formed in the thickness of about 0.3 to 3 mm to prevent the corrosion.

If the thickness is less than 0.3 mm, the steel pipe 10 is not insulated, or the resin layer 50 or the coating layer may be peeled off. If the thickness is more than 3 mm, a resin or coating agent is used more than required, and the outer diameter of the pipe is increased more than required.

In order to firmly bond the resin layer 50 or the coating layer onto the outer surface of the steel pipe 10, an adhesive (not illustrated) may be applied on the outer surface of the steel pipe 10, before the resin or coating agent is applied.

The end of the stainless steel pipe 30 may be further extended in an outward direction, and then may be bent so that the stainless steel pipe 30 is firmly coupled to the steel pipe 10, and the structure is illustrated in Figs. 4a to 6b.

Specifically, Fig. 4a is an enlarged cross-sectional view illustrating one end of the composite pipe 100. One end of the stainless steel pipe 30 is extended in an outward direction (referred to as 'an extended portion'), and then is formed in an 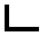 shape to cover a terminal side 11 of the steel pipe 10. Fig. 4b shows that an opposite end of the stainless steel pipe 30 is extended in an outward direction, and then is formed in an 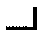 shape to cover the terminal side 11 of the steel pipe 10. The ends of the extended portion come into contact with the resin layer 50.

In order to perform the forming, the extended portions of the stainless steel pipe 30 are preferably processed in advance in a longitudinal direction of the composite pipe at a certain angular interval.

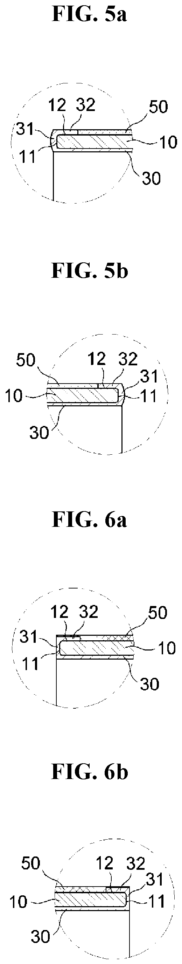

Figs. 5a and 5b show that both ends of the stainless steel pipe 30 are extended in an outward direction, and then are formed in a 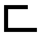 shape or 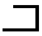 shape to cover the terminal side 11 and upper surface 12 of the steel pipe 10. The vertically bent portion of the extended portion forms a first extended portion 31 to cover the terminal side 11 of the steel pipe 10, and the horizontally bent portion forms a second extended portion 32 to cover the upper surface 12 of the steel pipe 10. The end of the second extended portion comes into contact with the resin layer 50.

Figs. 6a and 6b are different from Figs. 5a and 5b in that the resin layer 50 covers the upper surface of the second extended portion 32. Figs. 7i to 7vii show a sequential process of manufacturing the composite pipe 100 of Figs. 6a and 6b by the expanding method.

As illustrated in Figs. 7i and 7ii, one end of the stainless steel pipe 30 is formed in the 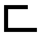 cross sectional shape, to form the first and second extended portions 31 and 32. Then, as illustrated in Figs. 7iii and 7iv, the opposite end of the stainless steel pipe 30 is inserted into the steel pipe 10 until one end of the steel pipe 10 is inserted into the extended portion. In this instance, in order to easily insert the stainless steel pipe 30, there is a slight gap between the outer surface of the stainless steel pipe 30 and the inner surface of the steel pipe 10.

As illustrated in Fig. 7v, the opposite end of the stainless steel pipe 30 is formed in the 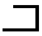 cross sectional shape to form the first and second extended portions 31 and 32 which cover the side 11 and the upper surface 12 of the opposite end of the steel pipe 10. After that, the steel pipe 10 and the stainless steel pipe 30 are heated and expanded.

The heating contributes to easy expansion of the pipe in the pipe expanding process, and contributes to strong bonding between the resin or coating agent and the adhesive in the process of forming the resin layer 50.

The pipe expansion is to expand the diameter so that the stainless steel pipe 30 is coupled to the steel pipe 10. The gap (clearance) formed to easily insert the stainless steel pipe 30 into the steel pipe 10 is removed by the expansion, so that the stainless steel comes into contact with the steel pipe. In this instance, the diameter of the steel pipe 10 is slightly increased, but since the steel pipe has a strong tendency to return to its original diameter after the expansion compared to the stainless steel pipe, the strong coupling force can be obtained.

The pipe expansion can be carried out by a pipe expanding apparatus. The diameter of the pipe expanding apparatus is smaller than the inner diameter of the stainless steel pipe 30, but can be expanded to be larger than the inner diameter of the stainless steel pipe 30 after it is inserted into the stainless steel pipe 30.

After the pipe expansion is completed, as illustrated in Figs. 7vi and 7vii, after the adhesive (not illustrated) is applied onto the outer surface of the steel pipe 10, the resin or coating is applied onto the adhesive to form the resin layer 50 or the coating layer. The resin layer 50 or the coating layer may be formed to cover the surface of the second extended portion 32. If the resin layer 50 or the coating layer is completely formed, the composite pipe 100 is cooled to complete the manufacture of the product.

Figs. 8i to 8vii show a sequential process of manufacturing the composite pipe 100 of Figs. 6a and 6b by a bonding and expanding method.

As illustrated in Figs. 8i and 8ii, after the adhesive 70 is applied onto the outer surface of the stainless steel pipe 30, one end is formed in the 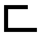 shape to form extended portions 31 and 32. Then, as illustrated in Figs. 8iii and 8iv, the opposite end of the stainless steel pipe 30 is inserted into the steel pipe 10, so that one end of the steel pipe 10 is inserted into the extended portion. In this instance, in order to easily insert the stainless steel pipe 30, there is a slight gap between the adhesive layer 70 and the inner peripheral surface of the steel pipe 10.

And, as illustrated in Fig. 8v, the opposite end of the stainless steel pipe 30 is formed in the 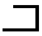 shape to form the first and second extended portions 31 and 32 which cover the side 11 and the upper surface 12 of the opposite end of the steel pipe 10. After that, the stainless steel pipe 30 and the steel pipe 10 are heated and expanded.

The heating contributes to easy expansion of the pipes in the pipe expanding process, to strong bonding between the stainless steel pipe 30 and the steel pipe 10 by the adhesive layer 70, and the resin or coating agent and the adhesive in the process of forming the resin layer 50.

The pipe expansion is to expand the diameter so that the stainless steel pipe 30 is coupled to the steel pipe 10. The gap (clearance) formed to easily insert the stainless steel pipe 30 into the steel pipe 10 is removed by the expansion, so that the stainless steel comes into contact with the steel pipe.

As illustrated in Figs. 8vi and 8vii, after the adhesive (not illustrated) is applied onto the outer surface of the steel pipe 10, the resin or coating agent is applied onto the adhesive to form the resin layer 50 or the coating layer. The resin layer 50 or the coating layer may be formed to cover the upper surface of the second extended portion 32. If the resin layer 50 or the coating layer is completely formed, the composite pipe 100 is cooled to complete the manufacture of the product.

### Embodiment 2

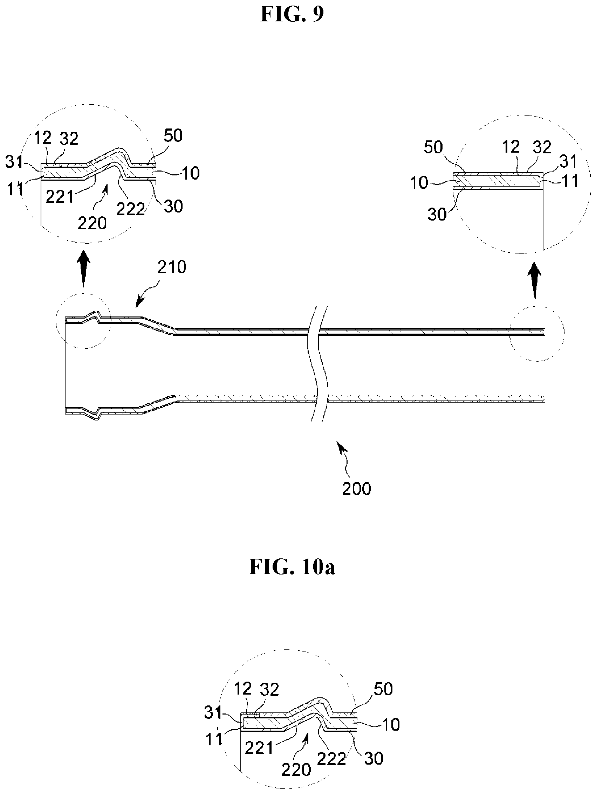

Fig. 9 is a cross-sectional view illustrating a composite pipe according to the second embodiment of the invention.

As illustrated in Fig. 9, the composite pipe 200 includes a steel pipe 10, a stainless steel pipe 30 inserted in the steel pipe 10, and a resin layer 50 or a coating layer formed on an outer surface of the steel pipe 10.

The steel pipe 10, the stainless steel pipe 30 and the resin layer 50 or the coating layer are substantially identical to the steel pipe 10, the stainless steel pipe 30 and the resin layer 50 or the coating layer in the first embodiment, respectively, except that the composite pipe 200 is a joint pipe, of which one end is expanded to form an expanded portion 210.

Specifically, one end of the composite pipe 200 is provided with an expanded portion 210, and the other end is provided with no expanded portion. The expanded portion 210 receives an opposite end of adjacent composite pipe 200. The expanded portion 210 is provided with a seating groove 220.

A packing member (not illustrated) is installed in the seating groove 220. The seating groove 220 is a ring-shaped groove which is formed by pressing the inner surface of the expanded portion in a circumferential direction. The outer surface corresponding to the seating groove 220 protrudes outwardly.

The seating groove 220 has a first inclined surface 221 and a second inclined surface 222, and a slope of the second inclined surface 222 is preferably larger than that of the first inclined surface 221. This prevents the packing member from being pushed back when the adjacent composite pipe 200 is inserted.

The packing member is a ring-shaped member made of rubber or resin, and comes into contact with the composite pipe 200 which is inserted into the expanded portion 210, to prevent leakage of water.

In the case of the composite pipe 200, the end of the stainless steel pipe 30 may be bended, similar to the composite pipe 100. In other words, the end of the stainless is extended in an outward direction, and then is formed in the 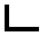 or 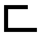 shape. This forming contributes to strong coupling between the stainless steel pipe 30 and the steel pipe 10.

Fig. 9 shows both ends of the stainless steel pipe 30 are formed in the 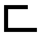 or 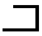 shape. In other words, the first extended portion 31 of the stainless steel pipe 30 covers the terminal side 11 of the steel pipe 10, and the second extended portion 32 covers the upper surface 12 of the end of the steel pipe 10.

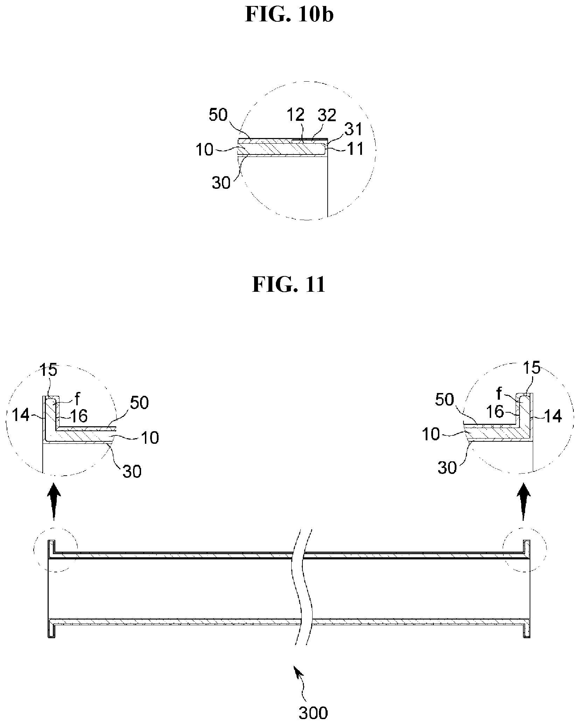

Figs. 10a and 10b show both ends of the stainless steel pipe 30 are formed in the 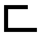 or 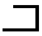 shape, and the resin layer 50 is formed on the upper surface of the second extended portion 32.

### Embodiment 3

Fig. 11 is a cross-sectional view illustrating a composite pipe according to the third embodiment of the invention.

As illustrated in Fig. 11, a composite pipe 300 includes a steel pipe 10, a stainless steel pipe 30 inserted in the steel pipe 10, and a resin layer 50 or a coating layer formed on an outer surface of the steel pipe 10.

The steel pipe 10, the stainless steel pipe 30 and the resin layer 50 or the coating layer are substantially identical to the steel pipe 10, the stainless steel pipe 30 and the resin layer 50 or the coating layer in the first embodiment, respectively, except that the composite pipe 300 includes a flange at one end or both ends (in Fig. 11 a flange f is formed at both ends of the composite pipe 300, but the flange f may be formed at one end of the composite pipe 300).

The steel pipe 10 has a flange f at one end. The flange f is the end of the steel pipe 10 which is vertically formed. The extended portion formed at the end of the stainless steel pipe 30 is formed to cover a front surface 14 of the flange f.

### Embodiment 4

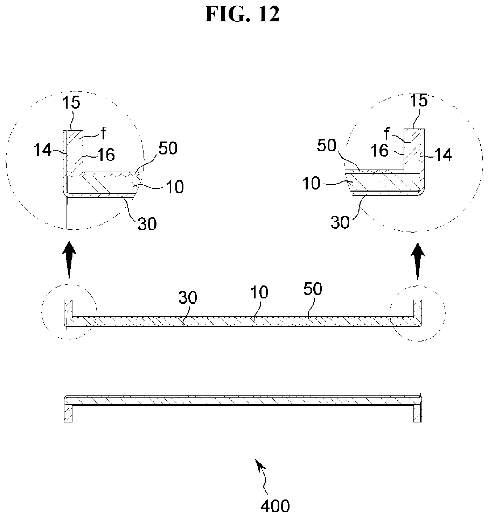

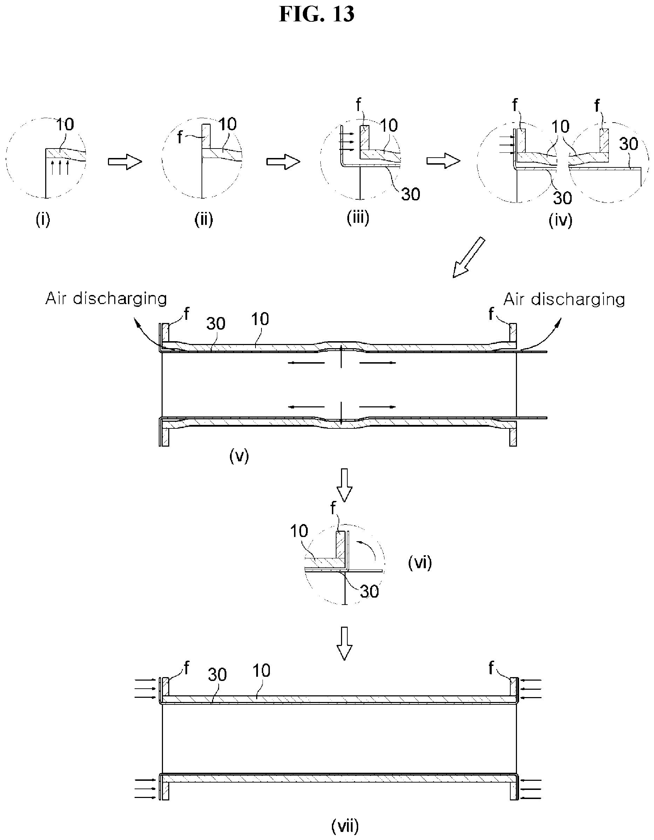

Fig. 12 is a cross-sectional view illustrating a composite pipe, and Fig. 13 is a cross-sectional view illustrating a sequential process of manufacturing the composite pipe of Fig. 12.

As illustrated in Figs. 12 and 13, a composite pipe 400 includes a steel pipe 10, a stainless steel pipe 30 inserted in the steel pipe 10, and a resin layer 50 or a coating layer formed on an outer surface of the steel pipe 10. The composite pipe 400 is substantially identical to the composite pipe 300 of the third embodiment, except that the flange f is not formed by bending the end of the steel pipe, but a ring-shaped member is welded to the end of the steel pipe to form the flange f. Therefore, the method for manufacturing the composite pipe 400 is different from the method for manufacturing the composite pipe 300. The flange f may be installed to both ends of the composite pipe 400, but may be installed to only one end thereof.

As illustrated in Fig. 13i, both ends of the steel pipe 10 are expanded. Then, as illustrated in Fig. 13ii, a ring-shaped flange f is welded to both ends of the steel pipe 10.

As illustrated in Figs. 13iii and 13iv, the stainless steel pipe 30 is inserted into the steel pipe 10. The outer diameter of the stainless steel pipe 30 is slightly smaller than that of the steel pipe 10, and thus the stainless steel pipe 30 is easily inserted into the steel pipe 10. In this instance, the expanded portion serves as a guide when the stainless steel pipe 30 is inserted. In order to easy insertion, there a slight gap between the outer surface of the stainless steel pipe 30 and the inner surface of the steel pipe 10.

After one end of the stainless steel pipe 30 is formed in the 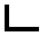 shape, the stainless steel pipe 30 may be inserted into the steel pipe 10. As an alternative, after the stainless steel pipe 30 is inserted into the steel pipe 10, one end of the stainless steel pipe 30 may be formed in the L-shape.

If the insertion is completed, the pipe is preheated (heat treatment), and then, as illustrated in Fig. 13v, the pipe is sequentially expanded from the center to both ends to discharge air existing between the steel pipe 10 and the stainless steel pipe 30, thereby preventing occurrence of a void or bubble layer.

The pipe expansion is to expand the diameter so that the stainless steel pipe 30 is coupled to the steel pipe 10. The gap (clearance) formed to easily insert the stainless steel pipe 30 into the steel pipe 10 is removed by the expansion, so that the stainless steel comes into contact with the steel pipe.

If the pipe expansion is completed, as illustrated in Fig. 13vi, the opposite end of the stainless steel pipe 30 is formed in the 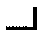 shape. Then, as illustrated in Fig. 13vii, the extended portions (both ends) of the stainless steel pipe 30 are pressed against the flange f.

Next, a resin or coating agent is applied onto the outer surface of the steel pipe 10 to form a resin layer 50 or a coating layer, and the composite pipe 400 is cooled to complete the product in Fig. 12.

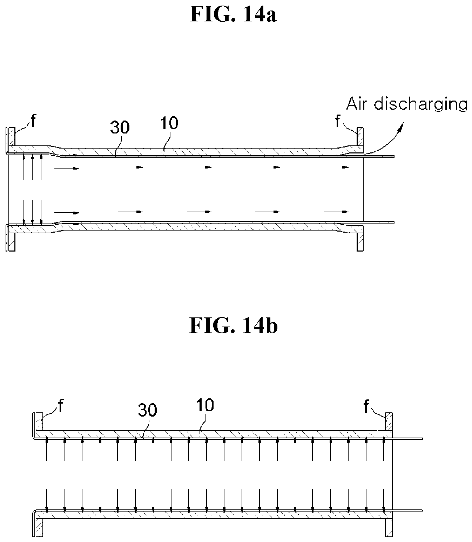

Fig. 14a is a cross-sectional view illustrating other method for expanding the pipe. As illustrated in Fig. 14a, the pipe may be sequentially expanded from one end to the other end. In this instance, the air existing between the steel pipe 10 and the stainless steel pipe 30 is moved in a direction of expanding the pipe, and then is discharged to the outside.

Fig. 14b is a cross-sectional view illustrating another method for expanding the pipe. As illustrated in Fig. 14b, all portions of the pipe may be simultaneously expanded.

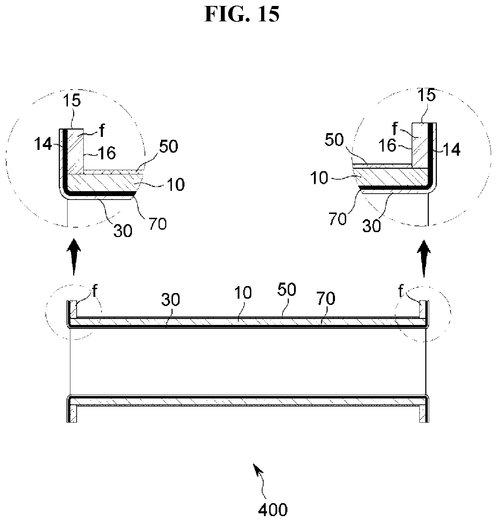

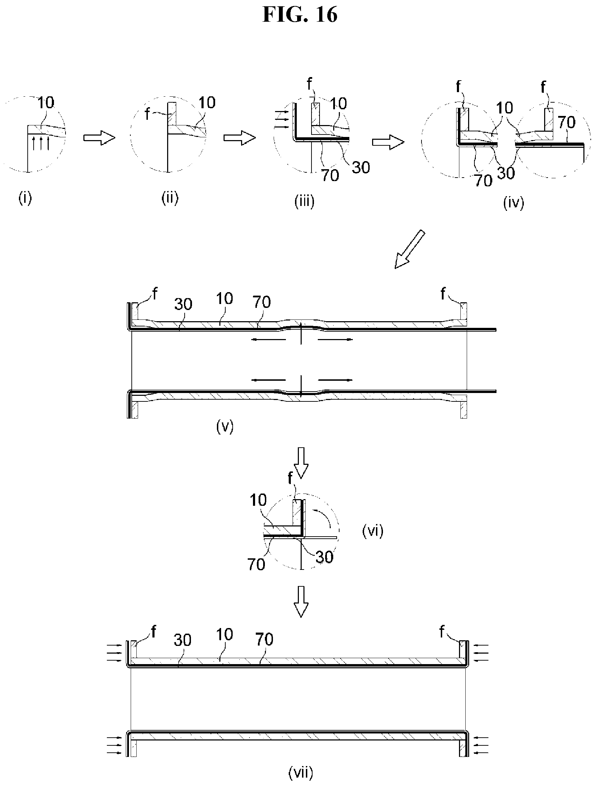

Fig. 15 is a cross-sectional view illustrating the composite pipe 400 having an adhesive layer 70, and Fig. 16 is a view illustrating a sequential process of manufacturing the composite pipe 400.

As illustrated in Figs. 15 and 16, the composite pipe 400 includes a steel pipe 10, a stainless steel pipe 30 inserted in the steel pipe 10, and a resin layer 50 or a coating layer formed on an outer surface of the steel pipe 10. The composite pipe 400 is substantially identical to the composite pipe 4 in Fig. 12, except that the composite pipe 400 includes the adhesive layer 70, and is manufactured by a combination of bonding and expansion.

As illustrated in Fig. 16i, both ends of the steel pipe 10 are expanded, and then, as illustrated in Fig. 16ii, a ring-shaped flange f is respectively welded to the expanded portions.

Then, as illustrated in Figs. 16iii and 16iv, the stainless steel pipe 30 is inserted into the steel pipe 10.

After one end of the stainless steel pipe 30 is formed in the 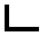 shape, and an adhesive is applied onto the outer surface of the stainless steel pipe 30, and then the stainless steel pipe 30 may be inserted into the steel pipe 10. Alternatively, an adhesive is applied onto the outer surface of the stainless steel pipe 30, and the stainless steel pipe 30 is inserted into the steel pipe 10, and then one end of the stainless steel pipe 30 may be formed in the 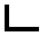 shape.

If the insertion is completed, the pipe is preheated (heat treatment), and then, as illustrated in Fig. 16v, the pipe is sequentially expanded from the center to both ends to discharge air existing between the steel pipe 10 and the stainless steel pipe 30, thereby preventing occurrence of a void or bubble layer.

If the pipe expansion is completed, as illustrated in Fig. 16vi, the opposite end of the stainless steel pipe 30 is formed in the 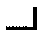 shape. Then, as illustrated in Fig. 16vii, the extended portions (both ends) of the stainless steel pipe 30 are pressed against the flange f, so that the extended portions are bonded to the flange f.

Next, a resin or coating agent is applied onto the outer surface of the steel pipe 10 to form a resin layer 50 or a coating layer, and the composite pipe 400 is cooled to complete the product in Fig. 15.

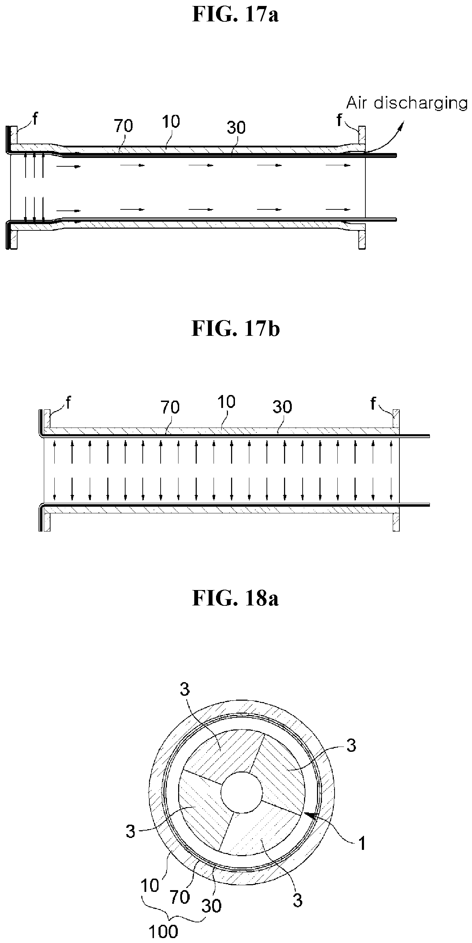

Fig. 17a is a cross-sectional view illustrating further another method for expanding the pipe. As illustrated in Fig. 17a, the pipe may be sequentially expanded from one end to the other end. In this instance, the air existing between the steel pipe 10 and the stainless steel pipe 30 is moved in a direction of expanding the pipe, and then is discharged to the outside.

Fig. 17b is a cross-sectional view illustrating further another method for expanding the pipe. As illustrated in Fig. 17b, all portions of the pipe may be simultaneously expanded.

Although the pipe expanding sequence of the composite pipe 400 has been described heretofore, the pipe expanding sequence of the composite pipes 100, 200 and 300 is substantially identical to that of the composite pipe 400. In other words, the composite pipes 100, 200 and 300 may be expanded from one end to the other end, may be expanded from the center to both ends, or may be simultaneously expanded through the entire portion. The pipe expanding methods will be described in detail from now on.

### Pipe Expanding Methods

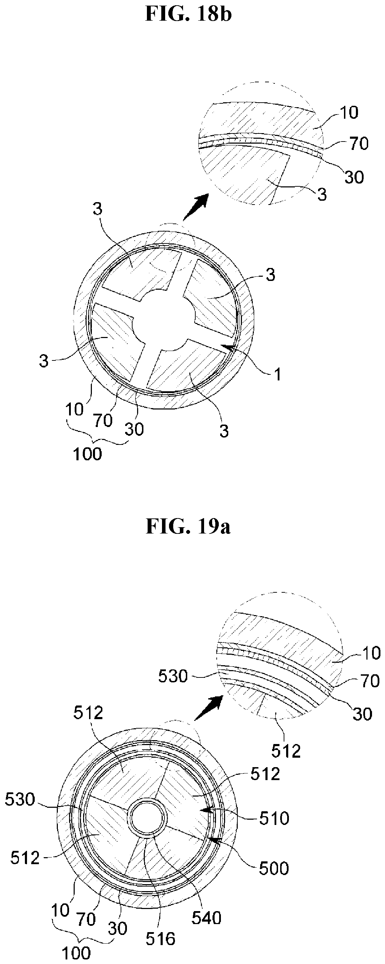

Figs. 18a and 18b are cross-sectional views illustrating a pipe expanding method of the conventional art. The pipe expanding method is carried out by a pipe expanding mold 1 which is installed and extended in a longitudinal direction of a pipe 100. The pipe expanding mold 1 has a plurality of pipe expanding members 3 which are disposed at a certain angular interval to form a doughnut cross sectional shape. The pipe expanding members 3 are moved in a radial direction of the pipe to press and expand the pipe. Figs. 18 and 18b illustrate the conventional art for expanding the pipe. The pipe expanding mold 1 has four pipe expanding members 3, and the pipe expanding members 3 are disposed at an interval of 90 degrees to form a doughnut shape.

Fig. 18a shows the state in which the pipe expanding mold 1 is retracted, and Fig. 18b shows the state immediately before the pipe expanding members 3 expand the pipe after they moved in the radial direction of the pipe. An outer surface of the pipe expanding mold 1 forms generally a circle in the state in which the pipe expanding mold is retracted. In the state in which the pipe expanding mold 1 is expanded, however, a space portion exists between left and right ends of the pipe expanding members 3 and the pipe, and since the space portion cannot press the pipe, the pipe is incompletely expanded. Also, in the state in which the pipe expanding mold 1 is expanded, a space portion also exists between the pipe expanding members 3, and since the space portion does not press the pipe, the pipe is incompletely expanded. Therefore, the conventional method has a problem in that the pipe subjected to the pipe expansion does not have a true circle.

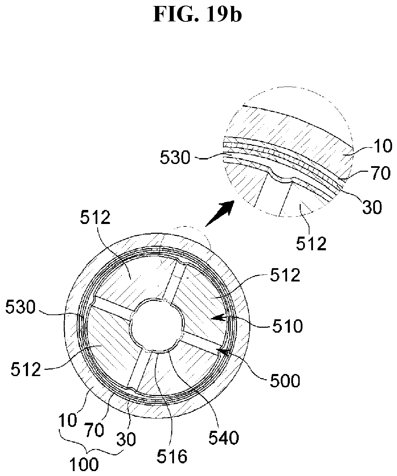

Fig. 19a shows a pipe expanding unit 500 for solving the problem, and Fig. 19b shows the state in which the pipe expanding mold in Fig. 19a is expanded. The pipe expanding unit 500 includes a pipe expanding mold 510 having a plurality of pipe expanding members 512, an outer tube 530 enclosing the outer surface of the pipe expanding mold 510, and a pressing member for moving the pipe expanding mold 510 in a radial direction of the pipe.

The pipe expanding unit 500 is different from the pipe expanding mold 1 in Figs. 18a and 18b in that the pipe expanding unit 500 further includes the outer tube 530 and the pressing member.

The outer tube 530 encloses the outer surface of the pipe expanding mold 510, and has a hollow space therein which is filled with oil, compressed air or water etc.,.

The pressing member is preferably an inner tube 540. The inner tube 540 is installed to penetrate an inner hollow portion 516 of the pipe expanding mold 500. The inner tube 540 is expanded by a fluid supplied from the outside, for example, oil, water or compressed air etc.,.

If the inner tube 540 is expanded, the pipe expanding members 512 are moved in the radial direction of the pipe, and thus the pipe expanding members 512 press the outer tube 530. Since the inner space of the outer tube 530 is filled with the oil or the like, the pressure is equal in the inner space. Accordingly, the same pressure is applied to the space portion between the pipe expanding members 512, so that the pipe expansion is uniformly achieved. The pipe 100 can be expanded to have the cross section of true circle.

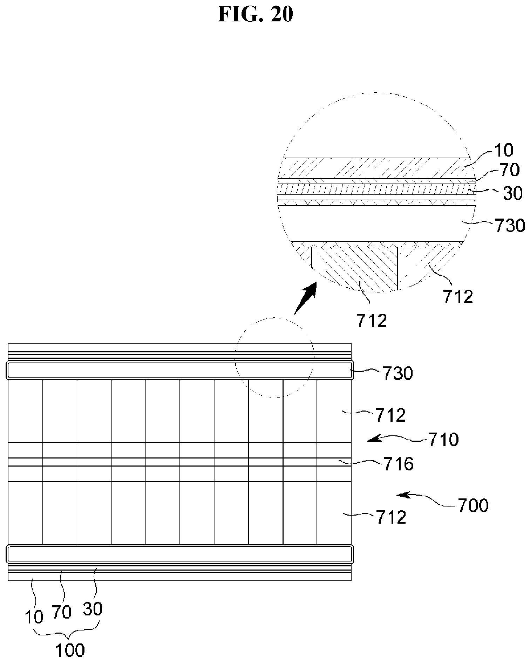

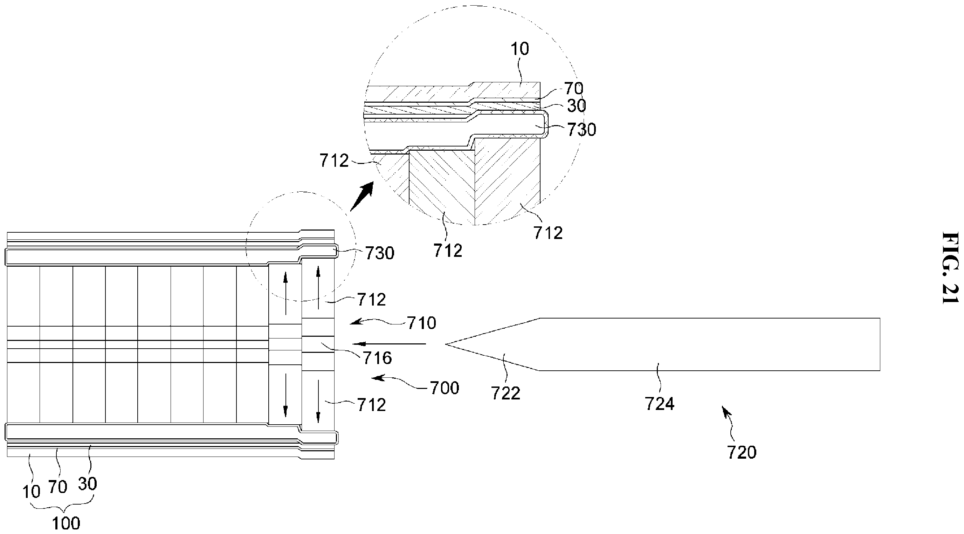

Fig. 20 shows another pipe expanding unit 700, and Fig. 21 shows the pipe expansion using the pipe expanding unit 700. The pipe expanding unit 700 includes a plurality of pipe expanding molds 710, an outer tube 730 enclosing the outer surface of the pipe expanding molds 710, and a pressing member for moving the pipe expanding molds 710 in a radial direction of the pipe.

The pipe expanding molds 710 have a plurality of pipe expanding members 712 disposed in a doughnut shape. The pipe expanding members 712 can be moved in the radial direction of the pipe by the pressing member.

The pipe expanding mold 710 has a width very shorter than a length of the pipe. Accordingly, the plurality of pipe expanding molds 710 are installed in the pipe so as to come into close contact with each other. The pipe expanding members 712 of the pipe expanding molds 710 which come into close contact with each other can be independently moved in the radial direction of the pipe. The side of the pipe expanding members 712 may be provided with a rail structure (not illustrated) to guide the movement of the pipe expanding members. That is, one side of the pipe expanding member 712 is provided with a groove line, and other side is provided with a protrusion line. When the pipe expanding members 712 are moved in the radial direction of the pipe, the pipe expanding member can be moved along the groove line or the protrusion line formed on the adjacent pipe expanding member 712. The rail structure may serve as a guide for slidably engaging the adjacent pipe expanding molds 710.

The outer tube 730 encloses the whole outer surface of the pipe expanding molds 710. The inner space of the outer tube 730 is filled with oil, water or compressed air etc.,. Alternatively, the outer tube may have a solid cross section (i.e., the outer tube has no hollow inner space).

The pressing member is preferably a wedge 720. The wedge 720 has a front sharp end 722 and a tubular portion 724 extending rearwardly from the sharp end 722. The sharp portion 722 is configured to be inserted into the inner hollow portion 716 and move the pipe expanding members 712 in the radial direction of the pipe. The tubular portion 724 is configured to continuously press the pipe against the pipe expanding members 712 after the insertion. Since the insertion is performed at one end of the pipe, the pipe expansion is performed from one end to the other end. The pipe expansion allows the air existing between the steel pipe 10 and the stainless steel pipe 30 to outwardly discharge in the pipe expanding direction.

Instead of the wedge 720, a hydraulic cylinder (not illustrated) may be used as the pressing member. The hydraulic cylinder is installed at a position corresponding to the pipe expanding members 712 of each pipe expanding mold 710. For example, in the case where the respective pipe expanding mold 710 includes four pipe expanding members 712, four hydraulic cylinders are installed relative to the respective pipe expanding molds 710, and are simultaneously expanded or retracted.

The hydraulic cylinders can be configured in such a way that the hydraulic cylinder installed in one end of the pipe first starts to expand, the hydraulic cylinder installed in center of the pipe first starts to expand, or all the hydraulic cylinders expands at once. If the respective hydraulic cylinders expands, the pipe corresponding to the hydraulic cylinder is expanded.

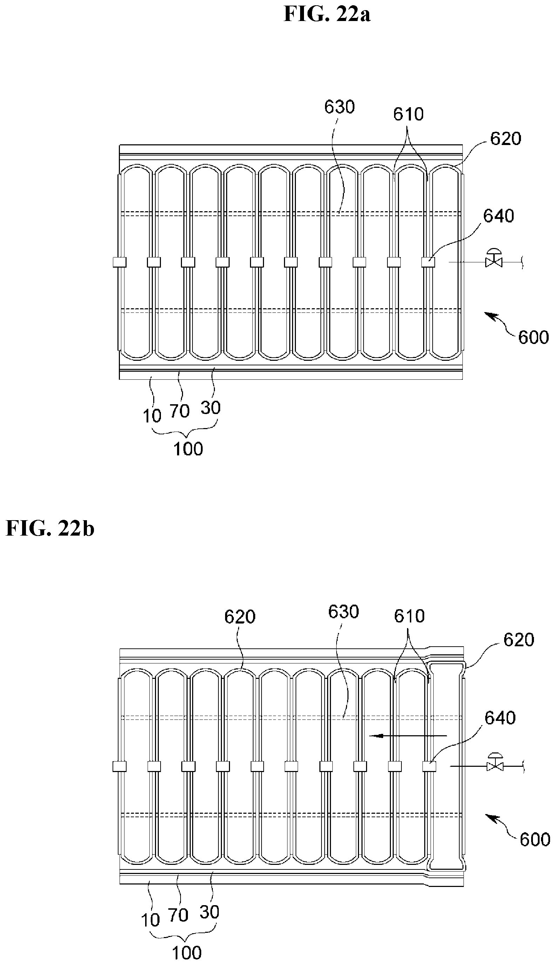

Fig. 22a shows another pipe expanding unit 600, and Fig. 22b shows the pipe expansion using the pipe expanding unit 600.

The pipe expanding unit 600 includes a plurality of partitions 610 installed at regular intervals, a tube 620 installed between the partitions 610 and being expandable in a radial direction of the pipe, and a valve 640 for connecting the adjacent tubes 620 each installed between the partitions 610. An interval maintaining rod 630 may be further installed to the partition 610. The interval maintaining rod 630 is configured to connecting the partitions 610, and constantly maintains the interval between the partitions 610, regardless of the internal pressure of the tube 620.

The tube 620 is installed between the partitions 610. If the inner space of the tube 620 is filled with oil, water or compressed air etc., the tube 620 is expanded in the radial direction of the pipe 100. In this instance, even though the internal pressure of the tube 620 is increased, the interval between the partitions 610 is constantly maintained by the interval maintaining rod 630. The tube 620 has an inner hollow portion, and the interval maintaining rod 630 penetrates the inner hollow portion of the tube.

The valve 640 connects the adjacent tubes 620. That is, if the tube 620 is filled with the oil or the like to increase the internal pressure by a predetermined level, the valve 640 is opened to supply the oil or the like to the adjacent tube 620. The adjacent tube 620 is sequentially expanded in the similar way to expand the pipe. Fig. 22b shows that the oil supplied from the outside is supplied to the tube 620 of the right end, so that the tube 620 is expanded, and thus the corresponding pipe is expanded. If the internal pressure of the tube 620 at the right end is increased by the predetermined level, the valve 640 is opened to supply the oil or the like to the adjacent tube 620, so that the corresponding pipe is expanded.

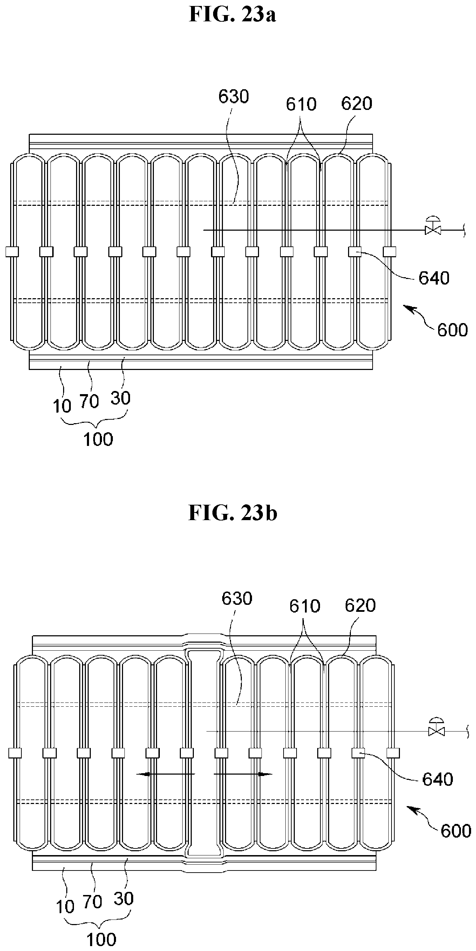

Figs. 23a and 23b show that the pipe is expanded from the center to the right and left ends by the pipe expanding unit 600.

The oil or the like supplied from the outside is first supplied to the tube 620 corresponding to the center portion of the pipe. If the inner pressure of the tube 620 is increased by the predetermined level, the valve 640 is opened to supply the oil or the like to the adjacent tubes 620 positioned at the left and right sides.

Although the expansion of the composite pipe 100 has been described heretofore, it would be apparent by those skilled in the art that the composite pipes 200, 300 and 400 may be expanded in the similar way.

## Claims

1. A composite pipe comprising:
a steel pipe (10);
a stainless steel pipe (30) which is inserted in the steel pipe (10); and
a resin layer (50) or a coating layer which is formed on an outer surface of the steel pipe (10) to prevent corrosion of the steel pipe (10), wherein
an outer surface of the stainless steel pipe (30) is expanded so that the stainless steel pipe (30) comes into directly contact and couples to the inner surface of the steel pipe (10), or the stainless steel pipe (30) is coupled to the steel pipe (10) by an adhesive layer (70), or is coupled to the steel pipe (10) by a combination of the expansion and the adhesive layer (70),
the steel pipe (10) is made of steel, except for stainless steel, and
the stainless steel pipe (30) has good corrosive resistance compared to that of the steel pipe (10), and has a thickness within a range of 5% to 50% of a thickness of the steel pipe (10).

2. The composite pipe according to claim 1, wherein the stainless steel pipe (30) is vertically extended in an outward direction of the pipe to cover a terminal side (11) of the steel pipe (10), and the extended portion meets the resin layer (50) or the coating layer.

3. The composite pipe according to claim 1, wherein an end of the stainless steel pipe (30) is extended to form first and second extended portions (31 and 32),
the first extended portion (31) is vertically extended in the outward direction of the pipe to cover a terminal side (11) of the steel pipe (10), and the second extended portion (32) is horizontally extended from an end of the first extended portion (31) toward a center of the pipe, and
the second extended portion (32) is formed to cover a portion of a upper surface of the end of the steel pipe (10), and the resin layer (50) or the coating layer is formed to cover the second extended portion (32), or to come into contact with an end of the second extended portion (32).

4. The composite pipe according to claim 1, wherein an end of the steel pipe (10) is formed integrally with a flange (f), or a ring-shaped flange (f) is welded to the end of the steel pipe (10), and
the stainless steel pipe (30) is extended to cover a front surface (14) of the flange (f).

5. The composite pipe according to any one of claims 1 to 4, wherein the expansion increases a diameter of the stainless steel pipe (30) by 1% to 20% to increase a diameter of the steel pipe,
the steel pipe (10) has a stronger force acting to return to the original diameter after the expansion compared to the stainless steel pipe (30),
and due to the force, strong coupling is obtained,
and the resin layer (50) or the coating layer is formed to have a thickness of 0.3 to 3 mm.

6. The composite pipe according to any one of claims 1 to 4, wherein the composite pipe (200) includes an expanded portion (210) at one end thereof, and
a seating groove (220) formed on an inner surface of the expanded portion (210) in a shape of a ring in a circumferential direction,
a packing member is installed in the seating groove (220),
the seating groove (220) has first and second inclined surfaces (221, 222), in which a slope of the second inclined surface (222) is larger than that of the first inclined surface (221) to prevent the packing member from being pushed back, and
a portion of an outer surface of the expanded portion (210) which corresponds to the seating groove protrudes outwardly.

7. A method for manufacturing a composite pipe, the method comprising the steps of:
(a) preparing a steel pipe (10) and a stainless steel pipe (30);
(b) processing one end of the stainless steel pipe (30);
(c) inserting the stainless steel pipe (30) into the steel pipe (10);
(d) processing the other end of the stainless steel pipe (30), after the step (c);
(e) heating and expanding the stainless steel pipe (30) and the steel pipe (10); and
(f) coating an outer surface of the steel pipe (10) with a resin or a coating, wherein
the end of the stainless steel pipe (30) is processed at the steps (b)(d) to cover a terminal side (11) of the steel pipe (10) or cover the terminal side (11) and a upper surface (12) of an end of the steel pipe,
an outer diameter of the stainless steel pipe (30) is smaller than an inner diameter of the steel pipe (10) so as to easily insert the stainless steel pipe into the steel pipe at the step (c),
a diameter of the stainless steel pipe (30) is increased at the step (e) so as to be coupled to the steel pipe (10),
the steel pipe (10) has a stronger force acting to return to the original diameter after the expansion compared to the stainless steel pipe (30),
the steel pipe (10) is made of steel, except for stainless steel, and
the stainless steel pipe (30) has good corrosive resistance compared to that of the steel pipe (10), and has a thickness within a range of 5% to 50% of a thickness of the steel pipe (10).

8. The method for manufacturing the composite pipe according to claim 7, further comprising, before the step (c), a step of applying an adhesive onto at least any one of an outer surface of the stainless steel pipe (30) and an inner surface of the steel pipe (10).

9. A method for manufacturing a composite pipe, the method comprising the steps of:
(a) preparing a steel pipe (10) and a stainless steel pipe (30);
(b) processing one end of the stainless steel pipe (30);
(c) inserting the stainless steel pipe (30) into the steel pipe (10);
(d) processing the other end of the stainless steel pipe (30), after the step (c); and
(e) heating the stainless steel pipe (30) and the steel pipe (10), and coating an outer peripheral surface of the steel pipe (10) with a resin or a coating layer for corrosion prevention;
the method further comprising a step of applying an adhesive onto at least any one of an outer surface of the stainless steel pipe (30) and an inner surface of the steel pipe (10), before the step (b) or between the step (b) and the step (c), wherein
the end of the stainless steel pipe (30) is processed at the steps (b)(d) to cover a terminal side (11) of the steel pipe (10) or cover the terminal side (11) and a upper surface (12) of an end of the steel pipe,
at the step (e), the resin layer (50) or the coating layer is formed to have a thickness of 0.3 mm to 3 mm,
the steel pipe (10) is made of steel, except for stainless steel, and
the stainless steel pipe (30) has good corrosive resistance compared to that of the steel pipe (10), and has a thickness within a range of 5% to 50% of a thickness of the steel pipe (10).

10. The method for manufacturing the composite pipe according to any one of claims 7 to 9, further comprising a step of expanding an end of the composite pipe to form an expanded portion (210), and forming a ring-shaped seating groove (220) on an inner surface of the expanded portion (210) in a circumferential direction, wherein
a portion of an outer surface of the composite pipe which corresponds to the seating groove (220) protrudes outwardly to correspond to the seating groove (220).

11. The method for manufacturing the composite pipe according to claim 8, wherein the expansion increases a diameter of the stainless steel pipe (30) by 1% to 20% to increase a diameter of the steel pipe,
the steel pipe (10) has a stronger force acting to return to the original diameter after the expansion compared to the stainless steel pipe (30), and due to the force, a strong coupling is obtained,
and the resin layer (50) or the coating layer is formed to have a thickness of 0.3 to 3 mm.

12. A method for manufacturing a composite pipe, the method comprising the steps of:
(a) preparing a steel pipe (10) and a stainless steel pipe (30);
(b) partially expanding both ends of the steel pipe (10), coupling a ring-shaped flange (f) to the expanded ends of the steel pipe (10), and processing one end of the stainless steel pipe (30) to have an 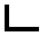 cross sectional shape;
(c) inserting the stainless steel pipe (30) into the steel pipe (10);
(d) expanding the stainless steel pipe (30) and the steel pipe (10), after the step (c);
(e) processing the other end of the stainless steel pipe (30) to have an 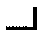 cross sectional shape;
(f) pressing both processed ends of the stainless steel pipe (30) against the flange (f) to come into contact with the flange (f); and
(g) coating an outer surface of the steel pipe 10 with a resin or a coating for corrosion prevention, wherein
an outer diameter of the stainless steel pipe (30) is smaller than an inner diameter of the steel pipe (10) so as to easily insert the stainless steel pipe into the steel pipe at the step (c),
a diameter of the stainless steel pipe (30) is increased at the step (e) so as to be coupled to the steel pipe (10),
the steel pipe (10) has a stronger force acting to return to the original diameter after the expansion compared to the stainless steel pipe (30), and due to the force, a strong coupling is obtained,
the steel pipe (10) is made of steel, except for stainless steel, and
the stainless steel pipe (30) has good corrosive resistance compared to that of the steel pipe (10), and has a thickness within a range of 5% to 50% of a thickness of the steel pipe (10).

13. The method for manufacturing the composite pipe according to claim 12, further comprising, before the step (c), a step of applying an adhesive onto at least any one of an outer surface of the stainless steel pipe (30) and an inner surface of the steel pipe (10).

14. The method for manufacturing the composite pipe according to claim 13, wherein the pipe expansion increases the diameter of the stainless steel pipe (30) by 1% to 20%, and
the resin layer (50) or the coating layer is formed to have a thickness of 0.3 to 3 mm.

15. The method for manufacturing the composite pipe according to any one of claims 7, 8, and 11 to 14, wherein the pipe expansion is carried out from a center portion of the pipe to both ends in order, or from one end to the other end in order, and
a pipe expanding unit (600) for the expansion includes
a plurality of partitions (610) installed at regular intervals;
a tube (620) installed between the partitions (610) and being expandable in a radial direction of the pipe; and
a valve (640) for connecting the adjacent tubes (620) each installed through the partitions (610),
in which the tube (620) corresponding to a center portion of the pipe or one end of the pipe is first supplied with a fluid from the outside, and is first expanded,
if an inner pressure of the expanded tube (620) is increased by a predetermined level, the fluid is supplied to the adjacent tube (620) via the valve (640), and
the pipe is sequentially expanded by sequential supply of the fluid to the tube (620) via the valve (640).

16. The method for manufacturing the composite pipe according to any one of claims 7, 8, and 11 to 14, wherein the expansion is carried out from a center portion of the pipe to both ends in order, from one end to the other end in order, or through the whole pipe at once, and
a pipe expanding unit (500; 700) for the expansion includes
a pipe expanding mold (510, 710) having at least two pipe expanding members (512, 712) disposed in a doughnut cross sectional shape;
an outer tube (530, 730) enclosing an outer surface of the pipe expanding mold (510, 710); and
a pressing member for moving the pipe expanding mold (510, 710) in a radial direction of the pipe at the same time or in order to press the outer tube (530, 730).

17. The method for manufacturing the composite pipe according to claim 16, wherein the pressing member has an inner tube (540) installed in an inner hollow portion (516) of the pipe expanding mold (510), and
the inner tube (540) is installed and extended in a longitudinal direction of the pipe, and is supplied with a fluid from an outside to be expanded.

18. The method for manufacturing the composite pipe according to claim 16, wherein the pipe expanding mold (710) has a width shorter than a length of the pipe, and a plurality of pipe expanding molds (710) are disposed in the pipe to be adjacent to each other, in which the plurality of pipe expanding mold (710) are independently moved in the radial direction of the pipe, and
the pressing member is a wedge (720) or a hydraulic cylinder,
in which the wedge (720) is inserted into an inner hollow portion (716) of the plurality of pipe expanding molds (710) to move the pipe expanding molds (710) in the radial direction of the pipe and thus expand the pipe, and the hydraulic cylinder is installed in the inner hollow portion (716) to correspond to the respective pipe expanding molds (710) .
